Europäisches Patentamt

(19) European Patent Office

Office européen des brevets

(11) Numéro de publication : **0 219 398**
**B1**

(12) **FASCICULE DE BREVET EUROPÉEN**

(45) Date de publication du fascicule du brevet :
24.01.90

(51) Int. Cl.⁵ : **F 16 F 15/12**, E 05 F 15/16//
B60J1/16

(21) Numéro de dépôt : 86402069.8

(22) Date de dépôt : 19.09.86

(54) **Dispositif amortisseur de couple dans un motoréducteur électrique destiné à l'entraînement d'accessoires dans les véhicules automobiles.**

(30) Priorité : 26.09.85 FR 8514292

(43) Date de publication de la demande :
22.04.87 Bulletin 87/17

(45) Mention de la délivrance du brevet :
24.01.90 Bulletin 90/04

(84) Etats contractants désignés :
DE GB IT SE

(56) Documents cités :
DE--C-- 3 403 259
FR--A-- 2 418 857
US--A-- 2 692 486
US--A-- 2 826 903
US--A-- 2 837 902
"Mechanisms, Linkages and Mechanical Controls",
N.P.Chironis, p.265

(73) Titulaire : ROCKWELL-CIM
6, rue Barbès Boite Postale 70
F-92302 Levallois Cedex (FR)

(72) Inventeur : Chevance, Claude
12 Bis, rue Bergonié
F-91600 Savigny Sur Orge (FR)
Inventeur : Pebre, Thierry
3, rue de Joinville Bâtiment 2
F-75019 Paris (FR)

(74) Mandataire : Polus, Camille et al
c/o Cabinet Lavoix 2, Place d'Estienne d'Orves
F-75441 Paris Cedex 09 (FR)

## Description

La présente invention a pour objet un dispositif amortisseur de couple dans un motoréducteur électrique, destiné à l'entraînement d'accessoires dans les véhicules automobiles, notamment des vitres.

Ce type de système d'entraînement d'accessoires comprend, comme connu par le FR-A 2 418 857, une roue dentée susceptible d'être entraînée en rotation par une vis sans fin accouplée à l'arbre de sortie du motoréducteur, un pignon de sortie d'axe perpendiculaire audit arbre de sortie, associé à la roue dentée pour entraîner l'accessoire, et des moyens interposés entre le pignon et la roue pour amortir le couple d'entraînement de la roue lorsque l'accessoire arrive en butée en fin de course et arrête la rotation du pignon.

On sait en effet que les motoréducteurs de lève-vitre électrique travaillent en butées haute et basse sans passer par un interrupteur fin de course. De ce fait, l'énergie cinétique de l'induit doit être absorbée par un système amortisseur qui, le plus souvent est situé entre la roue tangente précitée et le moyeu du réducteur.

Tous les systèmes amortisseurs actuellement connus comportent des blocs réalisés soit en plastomère (polyuréthane) ou en élastomère (caoutchouc nitrile).

Par ailleurs, les motoréducteurs utilisés sont irréversibles, afin que les vibrations du véhicule ne puissent pas faire descendre la vitre et que celle-ci ne puisse pas être ouverte en s'appuyant dessus, pour raison de sécurité.

Lorsqu'on ouvre ou ferme totalement la vitre, l'amortisseur de couple reste de ce fait en compression, ce qui après une certaine durée de service provoque un affaissement des blocs amortisseurs et de ce fait l'apparition d'un jeu de fin de course pour la vitre. De plus, dans le cas ou une retouche de peinture d'un panneau de porte doit être effectuée, ou d'un séjour à haute température ambiante (de + 80 °C à + 125 °C), la matière constituant l'amortisseur de couple subit un fluage, de sorte qu'au moment du renversement de sens, il apparaît un jeu angulaire sur le pignon de sortie du motoréducteur équivalent au fluage, et que de plus les qualités de l'amortisseur diminuent. Il en résulte également les inconvénients suivants : tout d'abord la vitre se déplace dans le sens haut-bas, la valeur de ce déplacement étant limitée par les cahiers des charges des constructeurs. De plus, l'amortisseur est plus court, donc moins efficace, ce défaut pouvant aller jusqu'à entraîner la rupture du mécanisme.

Les amortisseurs élastomère et plastomère présentent encore le désavantage consistant dans des variations de dureté shore en fonction de la température ambiante : ainsi à — 30 °C, la dureté augmente sensiblement et l'efficacité de l'amortisseur devient nettement moins satisfaisante.

L'invention a pour but de réaliser un amortisseur de couple ne présentant pas ces inconvénients.

Conformément à l'invention, les moyens d'amortissement comprennent une came fixée à l'extrémité du pignon tournée vers la roue et présentant deux faces opposées, une paire de sabots disposés en appui sur les faces de la came et maintenus en appui contre celles-ci par un ressort métallique annulaire coaxial au pignon et à la roue sous la forme d'un fil métallique enroulé hélicoïdalement sur les sabots, et des organes solidaires de la roue et coopérant avec les sabots de manière à transmettre à ceux-ci ainsi qu'à la came et au pignon le couple d'entraînement de la roue, de telle façon que lorsque le pignon et la came sont bloqués en rotation en fin de course de l'accessoire, le couple transmis aux sabots oblige ces derniers à s'écarter radialement en dilatant le ressort et en prenant appui sur la came.

Les frottements dans ce système amortisseur sont tels que le mauvais rendement absorbe une partie de l'énergie au moment de l'amortissement, tandis qu'à l'inverse, le retour à la position initiale s'effectue dans des conditions de rendement très différentes.

Cet amortisseur présente entre autres avantages, celui d'être totalement insensible aux variations de température grâce à la mise en œuvre d'un ressort métallique.

D'autres particularités et avantages de l'invention apparaîtront au cours de la description qui va suivre, faite en référence aux dessins annexés qui en illustrent un mode de réalisation à titre d'exemple non limitatif :

— la Figure 1 est une vue en perspective partielle d'un motoréducteur électrique, de la roue dentée tangente et du pignon d'entraînement associés, incorporant un dispositif amortisseur selon une forme de réalisation de l'invention ;

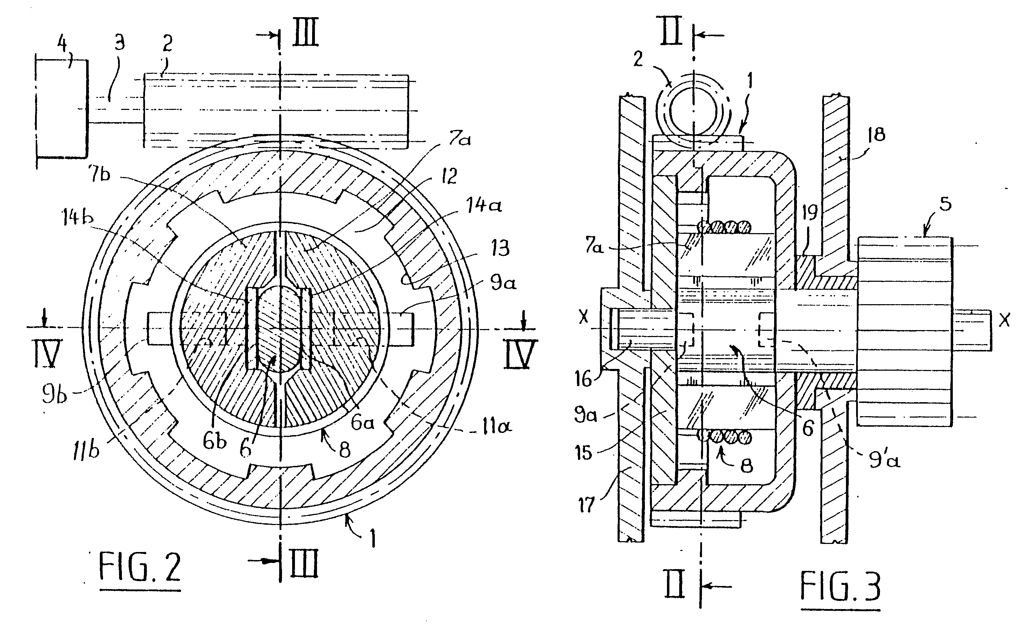

— la Figure 2 est une vue du dispositif amortisseur de la Figure 1 en coupe transversale suivant II-II de la Figure 3 :

— la Figure 3 est une vue en coupe axiale du dispositif amortisseur suivant III-III de la Figure 2 ;

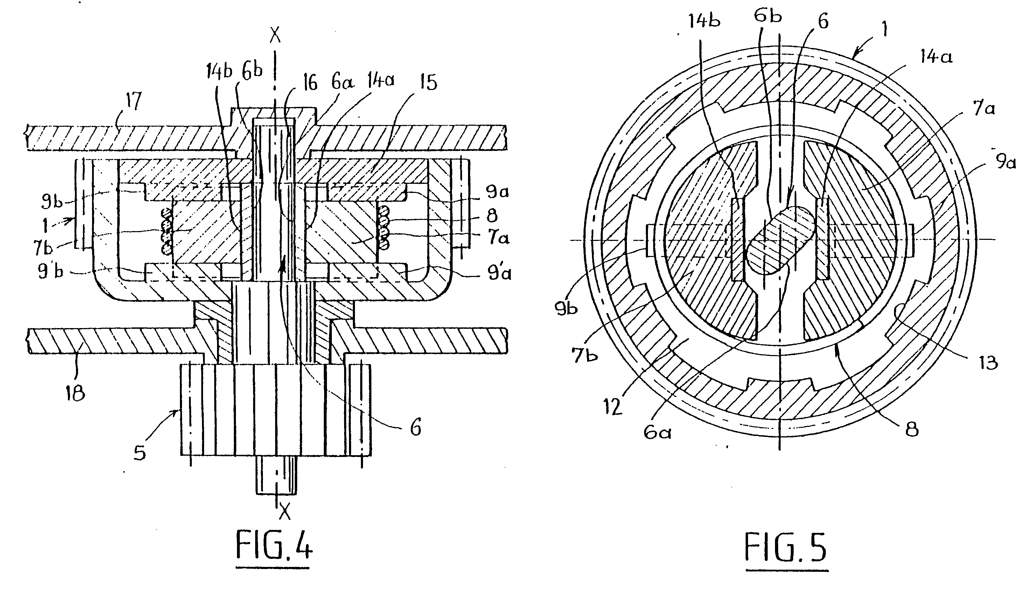

— la Figure 4 est une vue en coupe axiale du dispositif d'amortisseur suivant IV-IV de la Figure 2 ;

— la Figure 5 est une vue en coupe transversale dans le même plan que la Figure 2, montrant les sabots en position d'écartement radial maximum vis-à-vis de la came en fin d'amortissement ;

— la Figure 6 est un diagramme montrant la courbe d'hystérésis du dispositif amortisseur illustré aux Figures 1 à 5.

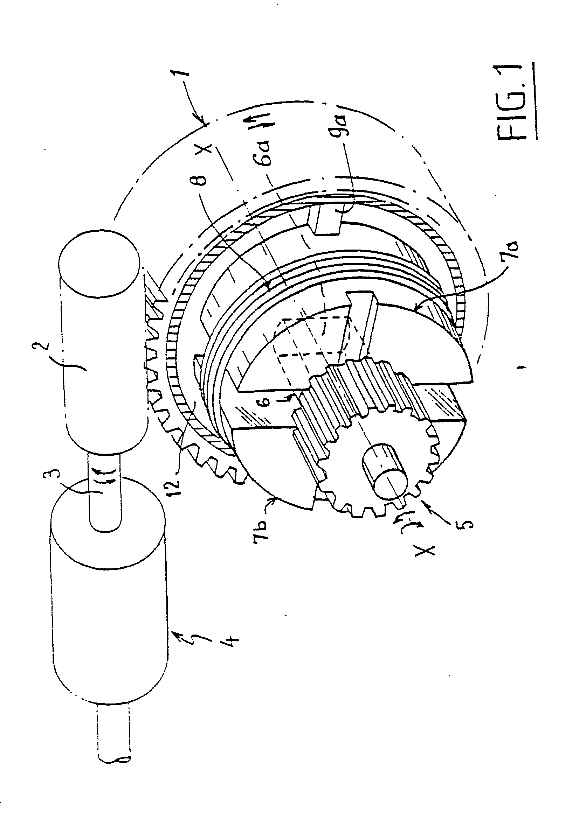

— Le dispositif représenté à la Figure 1 est destiné à l'entraînement d'accessoires dans les véhicules automobiles, ce dispositif pouvant en particulier faire partie d'un lève-vitre.

Il comprend une roue dentée 1 dite « roue tangente », en prise avec une vis sans fin 2 accouplée en rotation à l'arbre 3 de sortie de l'induit 4 d'un motoréducteur électrique, un pignon 5 associé à la roue 1 et coaxial à celle-ci, et des moyens interposés entre le pignon 5 et la roue 1 pour amortir le couple d'entraînement de la roue 1 lorsque l'accessoire (que dans la suite de l'exposé on considèrera être une vitre) entraîné par la rotation du pignon 5 et par des organes intermédiaires non représentés et connus en soi, arrive en butée de fin de course et arrête la rotation du pignon 5.

L'ensemble constitué par le motoréducteur et la vis 2 est bien connu en soi et n'a donc pas été représenté plus en détail, de même que les organes situés entre le pignon 5 et la vitre actionnée par ce dispositif.

Les moyens d'amortissement comprennent une came 6 fixée à l'extrémité du pignon 5 tournée vers la roue 1 et présentant deux faces opposées 6a, 6b, une paire de sabots similaires 7a, 7b disposés en appui sur les faces respectives 6a, 6b de la came 6 et maintenus en appui contre celles-ci par un ressort métallique annulaire 8 coaxial au pignon 5 et à la roue 1 et enveloppant les deux sabots 7a, 7b. Complémentairement, le dispositif amortisseur comporte des organes solidaires de la roue 1 et coopérant avec les sabots 7a, 7b de manière à transmettre à ceux-ci ainsi qu'à la came 6 et au pignon 5 le couple d'entraînement de la roue 1.

Dans l'exemple représenté, les organes précités sont constitués par deux paires de clavettes 9a, 9b ; 9'a, 9'b rapportées à la roue 1 ou faisant partie intégrante de celle-ci, diamétralement opposées, faisant saillie de la face intérieure de la roue 1 et s'engageant radialement dans des logements correspondants (11a, 11b pour les clavettes 9a et 9b) ménagés dans les sabots respectifs 7a, 7b. Un intervalle annulaire 12 est réservé entre les sabots 7a, 7b et une paroi intérieure 13 de la roue 1. En variante, le nombre de clavettes peut varier, par exemple être réduit à deux convenablement placées et dimensionnées.

La came 6 est de préférence réalisée d'une seule pièce avec le pignon 5 en acier traité. Ses deux faces 6a, 6b sont planes dans l'exemple représentés, et parallèles à l'axe général X-X de la roue 1 et du pignon 5. Cependant, en variante, les faces 6a, 6b peuvent être légèrement bombées, le profil de ces faces étant fonction de la loi d'amortissement désirée.

Chacun des sabots 7a, 7b se présente, dans l'exemple décrit, sous la forme d'un demi-cylindre, dont la face diamétrale vient en appui sur la face correspondante de la came 6 et est maintenue appliquée contre cette face par le ressort métallique 8.

De plus, dans le monde de réalisation représente aux dessins, des plaquettes 14a, 14b en matériau dur sont intercalées entre les faces d'appui 6a, 6b respectives de la came 6 et les faces intérieures des sabots 7a, 7b, faces intérieures dans lesquelles sont ménagés des logements qui reçoivent chacun une plaquette 14a, 14b. Les sabots 7a, 7b sont alors réalisés de préférence en une matière plastique appropriée telle que du polyamide chargé de verre, tandis que les plaquettes 14a, 14b sont en acier traité (tôle carbonitrurée trempée) ou réalisées en une matière de dureté équivalente

La roue 1 est pourvue d'un flasque 15 traversé par la partie terminale 16 de la came 6 qui s'engage dans un demi-carter 17 formant couvercle pour le mécanisme, tandis que l'extrémité opposée de la came 6 est engagée dans un demi-carter de sortie complémentaire 18. Une bague-coussinet 19 est interposée entre la came 6 et le demi-carter 18.

En variante, les plaquettes 14a, 14b peuvent être supprimées, les sabots 7a, 7b étant alors réalisés en acier traité (par exemple fritté), la came 6 étant par contre toujours réalisée en un matériau tel que l'acier traité, en raison des pressions élevées auxquelles elles est soumise.

Le fonctionnement du dispositif amortisseur qui vient d'être décrit est le suivant :

Lorsque le conducteur du véhicule désire lever ou abaisser l'accessoire (vitre par exemple), il déclenche le motoréducteur dans le sens désiré, de sorte que l'induit 4 entraîne en rotation la roue dentée 1 dans le sens correspondant, par l'intermédiaire de l'arbre 3 et de la vis 2. La roue 1 entraîne à son tour en rotation le pignon 5 par l'intermédiaire des clavettes 9a... des sabots 7a, 7b et de la came 6.

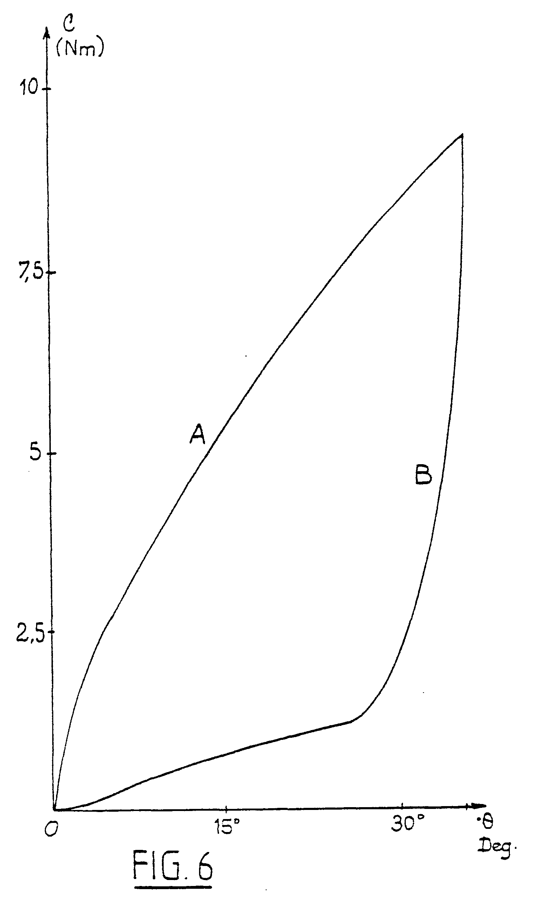

Lorsque la vitre arrive en butée de fin de course, la rotation du pignon 5 et de sa came 6 est bloquée, par exemple dans la position angulaire visible à la Figure 5. Cependant, le motoréducteur continue à entraîner en rotation la roue 1 jusqu'à ce que le conducteur ait cessé d'appuyer sur le bouton de commande. De ce fait, les clavettes 9a, 9b ; 9'a, 9'b exercent sur les sabots 7a, 7b un couple tendant à continuer à entraîner ceux-ci en rotation. Mais la came 6 étant bloquée en rotation, empêche les sabots 7a, 7b de tourner, de sorte que ceux-ci ne peuvent plus alors que coulisser radialement sur les clavettes en prenant appui sur les faces correspondantes 6a, 6b de la came 6 et en s'écartant l'un de l'autre. Ce déplacement radial s'effectue contre la force antagoniste de rappel du ressort métallique 8 qui se dilate tandis que les sabots 7a, 7b se rapprochent de la paroi interne 13 de la roue 1. Enfin d'amortissement, les organes du dispositif amortisseur occupent les positions représentées à la Figure 5, sur laquelle on voit que les plaquettes 14a, 14b ne sont plus appliquées sur les faces 6a, 6b de la came 6, avec lesquelles elles forment un angle appréciable.

Lorsque le motoréducteur est arrêté, le ressort 8 ramène les sabots 7a, 7b et les plaquettes 14a, 14b a leur position initiale par rapport à la came 6.

La figure 6 montre un exemple numérique de cycle d'hystérésis d'un système amortisseur selon l'invention, le couple (en Nm) étant porté en ordonnées et l'écartement angulaire des sabots par rapport à la came 6 étant porté en abscisses.

La partie A de cette courbe correspond à la course aller de l'amortissement, tandis que sa partie B correspond au retour.

Comme indiqué ci-dessus, le dispositif amortisseur conforme à l'invention est rendu totalement insensible aux variations de températures et au fluage, grâce à la présence du ressort métallique 8. De plus il n'est pas susceptible de subir un affaissement au bout d'un certain temps de service comme les amortisseurs connus, ce qui évite toute apparition d'un jeu en fin de course de la vitre.

## Revendications

1. Dispositif amortisseur de couple dans un motoréducteur électrique, comprenant une roue dentée (1) susceptible d'être entraînée en rotation par une vis (2) accouplée à l'arbre de sortie (3) du motoréducteur (4), un pignon (5) de sortie d'axe perpendiculaire audit arbre de sortie (3), associé à la roue dentée (1) pour entraîner l'accessoire, et des moyens interposés entre le pignon (5) et la roue (1) pour amortir le couple d'entraînement de la roue lorsque l'accessoire arrive en butée en fin de course et arrête la rotation du pignon (5), caractérisé en ce que les moyens d'amortissement comprennent une came (6) fixée à l'extrémité du pignon (5) tournée vers la roue (1) et présentant deux faces opposées (6a, 6b), une paire de sabots (7a, 7b) disposés en appui sur les faces (6a, 6b) de la came (6) et maintenus en appui contre celles-ci par un ressort métallique annulaire (8) coaxial au pignon (5) et à la roue (1) sous la forme d'un fil métallique enroulé hélicoïdalement sur les sabots, et des organes (9a, 9b) solidaires de la roue (1) et coopérant avec les sabots (7a, 7b), de manière à transmettre à ceux-ci ainsi qu'à la came (6) et au pignon (5) le couple d'entraînement de la roue, de telle façon que lorsque le pignon (5) et la came (6) sont bloqués en rotation en fin de course de l'accessoire, le couple transmis aux sabots (7a, 7b) oblige ces derniers à s'écarter radialement en dilatant le ressort (8) et en prenant appui sur la came (6).

2. Dispositif selon la revendication 1, caractérisé en ce que les organes solidaires de la roue (1) sont des clavettes (9a, 9b) rapportées à celle-ci ou en faisant partie intégrante et qui s'engagent radialement dans des logements correspondants (11a, 11b) des sabots (7a, 7b), un intervalle annulaire (12) étant ménagé entre lesdits sabots et une paroi intérieure (13) de la roue dentée (1) d'où font saillie les clavettes (9a, 9b).

3. Dispositif selon l'une des revendications 1 et 2, caractérisé en ce que des plaquettes (14a, 14b) en matériau dur sont intercalées entre les faces d'appui (6a, 6b) de la came (6) et les sabots (7a, 7b) associés, lesquels sont alors réalisés par exemple en une matière plastique appropriée tandis que les plaquettes (14a, 14b) sont des tôles carbonitrurées trempées ou matière équivalente.

4. Dispositif selon l'une des revendications 1 à 3, caractérisé en ce que les faces (6a, 6b) de la came (6) sont planes ou légèrement bombées, en fonction de la loi d'amortissement désirée.

5. Utilisation du dispositif selon l'une quelconque des revendications 1 à 4 dans un motoréducteur électrique destiné à l'entraînement d'accessoires dans les véhicules automobiles et notamment de vitres.

## Claims

1. A torque shock absorbing device in an electric motor speed reducer comprising a worm wheel (1) capable of being driven in rotation by a worm (2) coupled to the output shaft (3) of the motor speed reducer (4), an output pinion (5) with its axis perpendicular to the said output shaft (3), associated with the worm wheel (1) for driving the accessory, and means interposed between the pinion (5) and the wheel (1) for absorbing the driving torque for the wheel when the accessory arrives in an end of travel abutment and stops the rotation of the pinion (5), characterized in that the shock absorbing means comprise a cam (6) fixed to the end of the pinion (5) turned towards the wheel (1) and having two opposed faces (6a, 6b), a pair of shoes (7a, 7b) disposed to bear on the faces (6a, 6b) of the cam (6) and maintained in a bearing contact against the latter by an annular metallic spring (8) coaxial with the pinion (5) and the wheel (1), in the form of a metallic wire helically wound on the shoes and elements (9a, 9b) fixed to the wheel (1) and cooperating with the shoes (7a, 7b) so as to transmit to the shoes, as well as to the cam (6) and to the pinion (5) the driving torque of the wheel, so that when the pinion (5) and the cam (6) are prevented from rotating at the end of travel of the accessory, the torque transmitted to the shoes (7a, 7b) obliges the later to spread apart radially, by expanding the spring (8) and by bearing on the cam (6).

2. A device according to claim 1, characterized in that the elements fixed to the wheel (1) are keys (9a, 9b) added to the latter or forming an integral part thereof and which engage radially in corresponding recesses (11a, 11b) of the shoes (7a, 7b), an annular gap (12) being arranged between the said shoes and an internal wall (13) of the worm wheel (1) from which wall there project the keys (9a, 9b).

3. A device according to one of claims 1 and 2, characterized in that small plates (14a, 14b) made of a hard material are interposed between the bearing faces (6a, 6b) of the cam (6) and the associated shoes (7a, 7b) which are then made, for example, of a suitable plastic material, while the small plates (14a, 14b) are hardened carbonitrided plates or an equivalent material.

4. A device according to one of claims 1 to 3, characterized in that the faces (6a, 6b) of the cam (6) are planar or slightly dished depending on the shock absorbing standard desired.

5. A device according to any one of claims 1 to 4 in an electric motor speed reducer intended for the driving of accessories in automobile vehicles and of windows in particular.

## Patentansprüche

1. Dämpfungsvorrichtung für das Drehmoment in einem elektrischen Getriebemotor, bestehend aus einem Zahnrad (1), das durch eine mit der Ausgangswelle (3) des Getriebemotors (4) gekuppelte Schnecke (2) antreibbar ist, einem Ausgangsritzel (5) mit zur Ausgangswelle (3) senkrechter Achse, das mit dem Zahnrad (1) zum Antrieb des Zubehörteils verbunden ist, und zwischen das Ritzel (5) und das Zahnrad (1) eingesetzten Einrichtungen zur Dämpfung des Antriebsmoments des Zahnrads, wenn das Zubehörteil am Hubende in Anschlag kommt und die Drehung des Ritzels (5) anhält, dadurch gekennzeichnet, daß die Dämpfungseinrichtungen aus einem Nocken (6), der an dem dem Zahnrad (1) zugewandten Ende des Ritzels (5) befestigt ist und zwei einander entgegengesetzte Flächen (6a, 6b) aufweist, einem Paar von Backen (7a, 7b), die an den Flächen (6a, 6b des Nockens (6) anliegen und an diese durch eine zu dem Ritzel (5) und dem Zahnrad (1) koaxiale, ringförmige Metallfeder (8) in Form eines schraubenförmig auf die Backen aufgerollten Metalldrahts angedrückt gehalten sind, und aus Organen (9a, 9b) bestehen, die an dem Zahnrad (1) befestigt sind, und mit den Backen (7a, 7b) fest verbunden sind, daß sie auf diese sowie auf den Nocken (6) und auf das Ritzel (5) das Antriebsmoment des Zahnrads übertragen wird, so daß bei Blockierung der Drehung des Ritzels (5) und des Nockens (6) am Hubende des Zubehörteils das auf die Backen (7a, 7b) übertragene Drehmoment diese zwingt, sich radial voneinander zu entfernen, wobei sie die Feder (8) ausdehnen und auf dem Nocken (6) aufliegen.

2. Vorrichtung nach Anspruch 1, dadurch gekennzeichnet, daß die mit dem Zahnrad (1) fest verbundenen Organe Keile (9a, 9b) sind, die an diesem angebracht sind oder einen integrierenden Teil von ihm bilden und radial in entsprechende Aussparungen (11a, 11b) der Backen (7a, 7b) eintreten, wobei ein ringförmiger Zwischenraum (12) zwischen den Backen und einer Innenwand (13) des Zahnrads (1), an der die Keile (9a, 9b) hervorstehen, vorgesehen ist.

3. Vorrichtung nach einem der Ansprüche 1 und 2, dadurch gekennzeichnet, daß Platten (14a, 14b) aus einem harten Werkstoff zwischen die Anlageflächen (6a, 6b) des Nockens (6) und die zugeordneten Backen (7a, 7b) eingesetzt sind, die hierbei beispielsweise aus einem geeigneten Kunststoff bestehen, während die Platten (14a, 14b) carbonitrierte gehärtete Bleche oder ein entsprechendes Material sind.

4. Vorrichtung nach einem der Ansprüche 1 bis 3, dadurch gekennzeichnet, daß die Flächen (6a, 6b) des Nockens (6) je nach dem gewünschten Dämpfungsverlauf plan oder leicht gewölbt sind.

5. Verwendung der Vorrichtung nach einem der Ansprüche 1 bis 4 in einem elektrischen Getriebemotor zum Antrieb von Zubehörteilen in Kraftfahrzeugen, insbesondere von Fensterscheiben.

FIG. 1

FIG.3

FIG.2

FIG.4

FIG.5

3

FIG. 6